# FASCICULE DE BREVET EUROPEEN

(11) **EP 0 500 442 B1**
(45) Date de publication et mention de la délivrance du brevet: **01.03.1995**
(21) Numéro de dépôt: 92400415.3
(22) Date de dépôt: 17.02.1992
(51) Int. Cl.: H02K 9/06, F04D 29/28

(54) **Ventilateur pour machines tournantes électriques, notamment pour alternateurs de véhicules automobiles**
Lüfterrad für rotierende elektrische Maschinen, insbesondere für Wechselstromgeneratoren für Kraftfahrzeuge
Fan rotor for rotating electric machines, particularly for alternators for cars

(30) Priorité: 22.02.1991 FR 9102137
(43) Date de publication de la demande: 26.08.1992
(73) Titulaire: VALEO EQUIPEMENTS ELECTRIQUES MOTEUR, 94000 Creteil (FR)
(72) Inventeur: Rondier, Patrick, F-95360 Montmagny (FR)
(74) Mandataire: Le Forestier, Eric

(56) Documents cités:
- FR-A- 2 072 900
- FR-A- 2 606 465
- US-A- 3 814 960
- PATENT ABSTRACTS OF JAPAN vol. 12, no. 60 (E-584)(2907) 23 Février 1988 ; & JP-A-62 203 533
- PATENT ABSTRACTS OF JAPAN vol. 14, no. 63 (C-685) 6 Février 1990 ; & JP-A-1 285 294

## Description

La présente invention a pour objet un ventilateur pour machines tournantes électriques, notamment pour alternateurs de véhicules automobiles.

De tels appareils ont besoin d'être refroidis en cours de fonctionnement de manière à rester à une température limitée leur permettant d'assurer un rendement optimal.

Une des méthodes connues permettant d'obtenir de tels ventilateurs est décrite notamment dans le brevet français FR-A-2 606 465. Une telle méthode consiste, dans une première opération à découper un flan de tôle approximativement circulaire et comportant sur sa périphérie autant de dents que le ventilateur doit comporter de pales.

Dans une seconde opération, les dents sont pliées perpendiculairement au flan de tôle, afin d'obtenir des pales de ventilation.

Si une telle méthode permet d'obtenir des ventilateurs à coût réduit, elle présente néanmoins divers inconvénients dont celui notamment de ne pouvoir réaliser des pales de ventilation qu'en nombre limité.

En effet, le nombre de pales de ventilation que l'on peut obtenir est fonction de la surface circulaire périphérique du flan de tôle et, si, dans des machines tournantes de grand diamètre, leur nombre peut être suffisant, il n'en est pas de même dans les machines tournantes de faible diamètre comme par exemple les alternateurs de véhicules automobiles. Pour les mêmes raisons, la surface des pales de ventilation est également limitée.

On peut remédier en partie à ces inconvénients en donnant aux pales de ventilation des formes particulières pour augmenter leur rendement mais ces méthodes conduisent inévitablement à des opérations supplémentaires et donc des augmentations de coût souvent incompatibles avec une fabrication en grande série.

De plus, pour résoudre en particulier des problèmes de bruit, les pales de ventilation doivent avoir des inclinaisons différentes, ne pas être équidistantes et dans certains cas ne pas avoir les mêmes dimensions les unes par rapport aux autres.

Cet ensemble de contraintes est pratiquement impossible à réaliser à partir d'un flan de métal. L'une des solutions envisagées est de réaliser un ventilateur comportant ces caractéristiques par moulage d'une matière plastique.

Si les pales obtenues par ce procédé remplissent toutes les conditions désirées, tant au point de vue du rendement, que du bruit, un tel ventilateur ne peut se fixer facilement sur l'extrémité des roues polaires de l'alternateur.

En effet, si pour un ventilateur réalisé à partir d'un flan de métal, de simples points de soudure suffisent pour le rendre solidaire des roues polaires de l'alternateur, cette méthode particulièrement économique pour une fabrication en grande série ne peut s'appliquer à un ventilateur réalisé par moulage d'une matière plastique. Dans ce cas, sa fixation peut se réaliser par rivets ou par vis, mais ces solutions augmentent le coût de l'ensemble de l'alternateur de manière prohibitive.

Le problème reste entier en ce qui concerne la fixation du ventilateur même si celui-ci est constitué d'un flan en matière plastique surmoulé sur une armature métallique, comme représenté dans le document FR-A-2072900.

La présente invention résoud ces problèmes et propose à cet effet un ventilateur pour machines tournantes électriques, notamment pour alternateurs de véhicules automobiles, ledit alternateur comprenant notamment deux ensembles polaires à griffes solidaires en rotation d'un arbre, un noyau central et une bobine inductrice dont les extrémités sont reliées à des cosses solidaires d'un épaulement ménagé sur l'arbre, ledit ventilateur étant réalisé en matière plastique et comportant notamment un flan circulaire sur lequel sont ménagées de matière une pluralité de pales de ventilation, le flan étant surmoulé sur une armature métallique, caractérisé en ce que le flan comporte des moyens de fixation sur des extrémités des dents que présente l'ensemble polaire, ces moyens étant constitués de trous ménagés dans le flan en regard des extrémités, lesdits trous étant traversés par l'armature métallique.

D'autres aspects préférés, mais non limitatifs du ventilateur de la présente invention sont exposés ci-dessous :
- le ventilateur comporte des moyens de logement des cosses constitués de creusures ménagées de matière suivant un axe diamétral entre une jupe cylindrique et un moyeu central;
- le ventilateur comporte des moyens de passage des liaisons électriques entre la bobine inductrice et les cosses, lesdits moyens étant constitués de rainures ménagées de matière dans le flan en prolongement diamétral des creusures.

L'invention sera mieux comprise avec la description qui va suivre en regard des dessins annexés dans lesquels:
- la figure 1 est une vue en coupe partielle d'un alternateur pour véhicule automobile équipé d'un ventilateur suivant l'invention,
- la figure 2 est une vue suivant la flèche F de la figure 1 du ventilateur suivant l'invention,
- la figure 3 est une vue en coupe suivant la ligne III-III de la figure 2,
- la figure 4 est une vue en coupe suivant la ligne IV-IV de la figure 2,
- la figure 5 est une vue en coupe partielle, à une échelle agrandie, selon la ligne V-V de la figure 2.

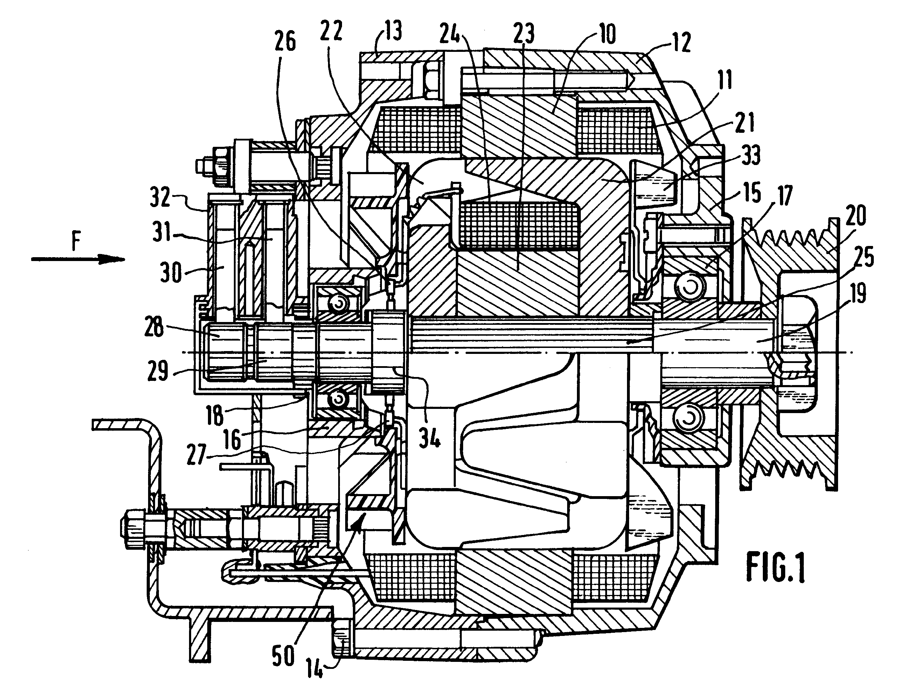

On se réfère tout d'abord à la figure 1 qui représente l'ensemble d'un alternateur de véhicule automobile équipé en particulier d'un ventilateur suivant l'invention.

Un alternateur de ce type comprend un ensemble statorique constitué d'un paquet de tôles feuilletées 10 dans lequel sont ménagées de matière une série d'encoches contenant les enroulements statoriques 11. L'ensemble statorique est maintenu en position entre deux flasques d'extrémité 12,13 rendus solidaires par des vis 14.

Chacun des flasques d'extrémité 12,13 comprend un palier 15,16 comprenant un roulement à billes respectivement 17,18 dans lesquels tourillonne un arbre 19 entraîné par le moteur à combustion interne par l'intermédiaire d'une poulie 20.

L'arbre 19 porte l'ensemble rotorique constitué de deux éléments polaires à griffes 21,22 emprisonnant un noyau central 23 sur lequel est placée une bobine inductrice 24.

L'ensemble rotorique est emmanché à force sur l'arbre 19 et maintenu en rotation grâce à des cannelures 25 ménagées sur l'arbre 19.

Les extrémités de la bobine inductrice 24 sont reliées à des cosses respectivement 26,27 solidaires d'un épaulement 34 ménagé sur l'arbre 19. Les cosses 26,27 sont reliées, à travers l'arbre 19 à deux bagues collectrices 28,29 sur lesquelles viennent frotter deux balais 30,31 situés dans un ensemble porte-balais 32.

Sur l'ensemble polaire à griffes 21, côté palier 15, est fixé un ventilateur 33 réalisé de manière classique à partir d'un flan de tôle.

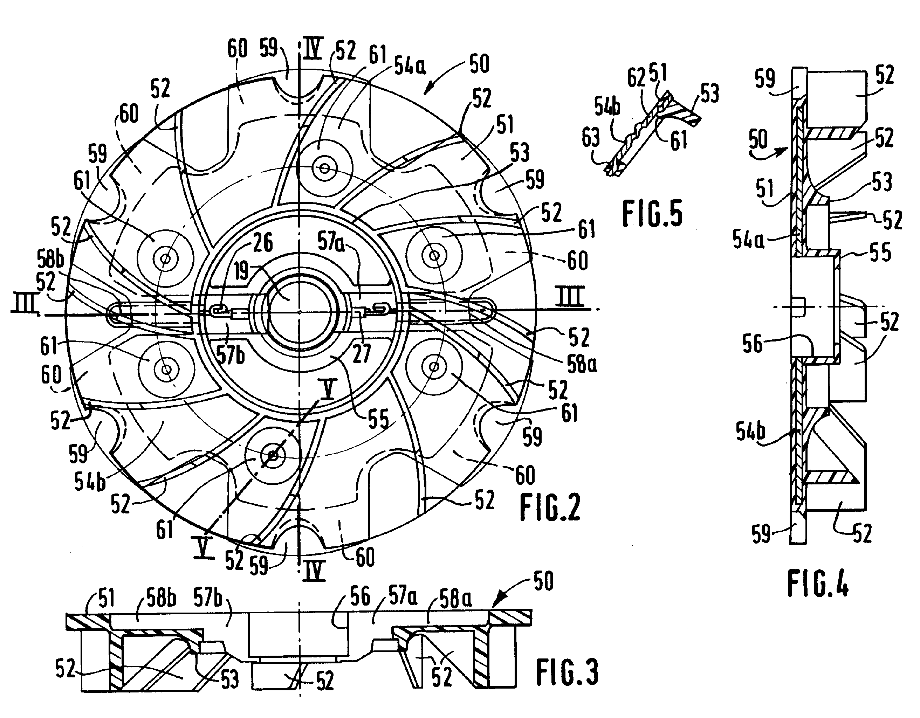

Sur l'ensemble polaire à griffes 22, côté palier 16, est fixé un ventilateur 50 réalisé suivant l'invention et qui va être décrit en détail en référence aux figures 2 à 5.

Le ventilateur 50 se présente sous la forme d'un corps en matière plastique ayant globalement la forme d'un flan circulaire 51 sur lequel sont ménagées de matière des pales de ventilation 52.

Ainsi qu'on le remarque en particulier sur la figure 2, les pales de ventilation 52 au nombre de douze dans l'exemple représenté ne sont ni symmétriques, ni équidistantes pour les raisons explicitées plus haut.

On appréciera que le corps du ventilateur étant réalisé par moulage de matière plastique, le nombre et le grandeur des pales de ventilation 52 ne sont plus limités comme c'est le cas pour un ventilateur classique réalisé à partir d'un flan de tôle.

Le ventilateur 50 présente une jupe cylindrique 53 sur laquelle viennent se raccorder les extrémités intérieures des pales de ventilation 52.

L'ensemble du corps du ventilateur 50 est surmoulé sur une armature métallique constituée, dans l'exemple représenté, de deux plaques 54a,54b, lesdites plaques comportant, comme il sera explicité plus avant les moyens de fixation du ventilateur 50 sur l'ensemble polaire à griffes 22.

Le ventilateur 50 comprend un noyau central cylindrique 55, dans lequel est ménagé un trou épaulé 56 destiné, d'une part, au passage de l'arbre 19 du rotor de l'alternateur, et d'autre part, au logement de l'épaulement 34 de l'arbre 19.

Sur l'une des faces du flanc 51, suivant un axe diamétral, sont ménagées de matière deux creusures 57a,57b entre l'alésage 56 et la paroi cylindrique 53. Ces deux creusures 57a,57b sont destinées à recevoir les cosses de raccordement 26,27 fixées sur l'épaulement 34 de l'arbre 19 comme il est montré en particulier sur les figures 1 et 2.

Les logements 57a,57b sont prolongés diamétralement par deux rainures 58a,58b qui constituent les moyens de passages des fils de raccordement entre les extrémités de la bobine inductrice 24 et les cosses 26,27 (voir figure 1).

Sur la figure 2, on a représenté en traits fins le contour des extrémités des griffes de l'ensemble polaire 22. Sur cette figure 2, on voit que le flan 51 du ventilateur 50 comporte à sa périphérie six encoches semi-circulaires 59 réparties angulairement de manière uniforme. Ces encoches 59 sont situées au droit des dents 60 des griffes de l'ensemble polaire 22 et constituent ainsi des passages pour les moyens d'équilibrage du rotor de l'alternateur.

Suivant l'invention, l'armature métallique 54a,54b comporte des moyens permettant la réalisation de la fixation du ventilateur 50 sur l'ensemble polaire 22 de manière particulièrement économique.

Ces moyens sont constitués de six trous 61 ménagés dans le flan 51 en matière plastique, trous 61 au travers desquels passe l'armature métallique 54a,54b comme représenté en détail sur la figure 5.

Au droit des trous 61, l'armature métallique présente un décrochement 62 de manière à ce qu'elle affleure la face arrière 63 du flan 51. Les trous 61 sont agencés dans le flan 51 de manière à se situer au droit des dents 60 de l'ensemble polaire 22.

La fixation du ventilateur 50 peut alors s'effectuer par simples points de soudure au travers des trous 61, de la même manière qu'avec un ventilateur classique réalisé en métal.

Le nombre de pales de ventilation 52 pourra être quelconque, de même l'armature métallique 54a,54b pourra être constituée d'une seule plaque sans pour cela sortir du cadre de la présente invention telle que définie dans les revendications.

## Revendications

1. Ventilateur pour machines tournantes électriques, notamment pour alternateurs de véhicules automobiles, ledit alternateur comprenant notamment deux ensembles polaires à griffes (21,22) solidaires en rotation d'un arbre (19), un noyau central (23) et une bobine inductrice (24) dont les extrémités sont reliées à des cosses (26,27) solidaires d'un épaulement (34) ménagé sur l'arbre (19), ledit ventilateur (50) étant réalisé en matière plastique et comportant notamment un flan circulaire (51) sur lequel sont ménagées de matière une pluralité de pales de ventilation (52), le flan (51) étant surmoulé sur une armature métallique (54a,54b), caractérisé en ce que le flan (51) comporte des moyens de fixation sur des extrémités des dents (60) que présente l'ensemble polaire (22), ces moyens étant constitués de trous (61) ménagés dans le flan (51) en regard des extrémités (60), lesdits trous (61) étant traversés par l'armature métallique (54a,54b).

2. Ventilateur selon la revendication 1, caractérisé en ce que l'armature métallique (54a,54a) présente au droit de chacun des trous (61) un décrochement (62), en sorte que ladite armature affleure une face (63) du flan (51).

3. Ventilateur selon la revendication 1, caractérisé en ce qu'il comporte des moyens de logement des cosses (26,27) constitués de creusures (57a,57b) ménagées de matière suivant un axe diamétral entre une jupe cylindrique (53) et un moyeu central (55).

4. Ventilateur selon l'une des revendications 1 à 3, caractérisé en ce qu'il comporte des moyens de passage des liaisons électriques entre la bobine inductrice (24) et les cosses (26,27), lesdits moyens étant constitués de rainures (58a,58b) ménagées de matière dans le flan (51) en prolongement diamétral des creusures (57a,57b).

5. Ventilateur selon la revendication 1, caractérisé en ce que le flan (1) présente à sa périphérie des encoches semi-circulaires (59) situées en regard des extrémités des dents (60).

## Patentansprüche

1. Lüfterrad für rotierende elektrische Maschinen, insbesondere für Wechselstromgeneratoren für Kraftfahrzeuge, wobei dieser Wechselstromgenerator insbesondere zwei drehfest mit einer Welle (19) verbundene Klauenpoleinheiten (21, 22), einen Kern (23) und eine Erregerwicklung (24) umfaßt, deren Enden mit Anschlußschuhen (26, 27) verbunden sind, die fest an einer auf der Welle (19) vorgesehenen Schulter (34) angebracht sind, wobei das genannte Lüfterrad (50) aus Kunststoff ausgeführt ist und insbesondere eine kreisförmige Scheibe (51) umfaßt, an der einstückig eine Mehrzahl von Lüfterflügeln (52) vorgesehen ist, und wobei die Scheibe (51) auf einer Metalleinlage (54a, 54b) aufgeformt wird , **dadurch gekennzeich****net**, daß die Scheibe (51) Mittel zur Befestigung an den Enden der Zähne (60) umfaßt, die an der Poleinheit (22) vorgesehen sind, wobei diese Befestigungsmittel aus Löchern (61) bestehen, die in die Scheibe (51) gegenüber den Enden (60) eingearbeitet sind, und wobei die Metalleinlage (54a, 54b) durch diese Löcher (61) hindurchgeht.

2. Lüfterrad nach Anspruch 1 , **dadurch ge****kennzeichnet**, daß die Metalleinlage (54a, 54b) im Bereich jedes der Löcher (61) einen Absatz (62) aufweist, so daß die genannte Einlage bis zu einer Seite (63) der Scheibe (51) reicht.

3. Lüfterrad nach Anspruch 1 , **dadurch gekennzeichnet**, daß es Mittel für die Aufnahme der Anschlußschuhe (26, 27) umfaßt, die aus Einsenkungen (57a, 57b) bestehen, welche einstückig entlang einer diametralen Achse zwischen einem zylindrischen Mantel (53) und einem Kern (55) vorgesehen sind.

4. Lüfterrad nach einem der Ansprüche 1 bis 3 , **da****durch gekennzeichnet**, daß es Mittel für den Durchgang der elektrischen Verbindungen zwischen der Erregerwicklung (24) und den Anschlußschuhen (26, 27) umfaßt, wobei diese Mittel aus Nuten (58a, 58b) bestehen, die einstückig als diametrale Verlängerung der Einsenkungen (57a, 57b) in die Scheibe (51) eingearbeitet sind.

5. Lüfterrad nach Anspruch 1 , **dadurch gekennzeichnet**, daß die Scheibe (51) an ihrem Umfang halbkreisförmige Nuten (59) aufweist, die sich gegenüber den Enden der Zähne (60) befinden.

## Claims

1. A fan for rotary electrical machines, especially for motor vehicle alternators, the said alternator comprising in particular two overlapping pole assemblies (21, 22) secured on a shaft (19) for rotation therewith, a central core (23), and an inductive winding (24) the ends of which are connected to terminals (26, 27) fixed to a shoulder (34) formed on the shaft (19), the said fan (50) being made of plastics material and comprising, in particular, a circular shell (51) on which are formed integrally a plurality of ventilating vanes (52), the shell (51) being moulded on to a metallic armature (54a, 54b), characterised in that the shell (51) includes means for fastening it on to the end of teeth (60) of the pole assembly (22), the said means comprising holes (61) formed in the shell (51) in facing relationship with the ends (60), with the metallic armature (54a, 54b) passing through the said holes (61).

2. A fan according to Claim 1, characterised in that the metallic armature (54a, 54b) has in alignment with each of the holes (61) a deformed portion (62) such that the said armature is flush with a face (63) of the shell (51).

3. A fan according to Claim 1, characterised in that it includes housing means for the terminals (26, 27) comprising recesses (57a, 57b) formed integrally on a diametral axis between a cylindrical skirt (53) and a central hub (55).

4. A fan according to one of Claims 1 to 3, characterised in that it includes means for passage of electrical connections between the inductive winding (24) and the terminals (26, 27), the said means comprising grooves (58a, 58b) formed integrally in the shell (51) as diametral extensions of the recesses (57a, 57b).

5. A fan according to Claim 1, characterised in that the shell (1) has at its periphery semicircular notches (59) situated in facing relationship with the ends of the teeth (60).
